# EUROPÄISCHE PATENTANMELDUNG

(11) **EP 4 549 228 A1**
(43) Veröffentlichungstag der Anmeldung: **07.05.2025**
(21) Anmeldenummer: 24204877.5
(22) Anmeldetag: 07.10.2024
(51) Int. Cl.: B60L 53/16, H01R 13/447, H01R 13/639

(54) **VERRIEGELUNGSVORRICHTUNG FÜR EINE LADESTECKDOSENEINHEIT UND LADESTECKDOSENEINHEIT**

(30) Priorität: 09.10.2023 DE 102023127429
(71) Anmelder: HELLA GmbH & Co. KGaA, 59552 Lippstadt (DE)
(72) Erfinder: Maßmann, Clemens, 59555 Lippstadt (DE); Berhorst, Jann, 33178 Borchen (DE); UTERMÖHLEN, Fabian, 59557 Lippstadt (DE)
(74) Vertreter: Behr-Wenning, Gregor

(57) **Zusammenfassung**

Die vorliegende Erfindung betrifft eine Verriegelungsvorrichtung (100) für eine Ladesteckdoseneinheit (1000), umfassend
- einen elektromotorischen Stellantrieb (110),
- ein mittels des Stellantriebs (110) betätigbares erstes Verriegelungsmittel (120a, 120b) mit einem Verriegelungsstift (121 a, 121b) zum Verriegeln eines Ladesteckers an einer Ladesteckdose (200) der Ladesteckdoseneinheit (1000), und
- ein mittels des Stellantriebs (110) betätigbares zweites Verriegelungsmittel (130), das zum Verriegeln einer Dosenabdeckung (300) der Ladesteckdoseneinheit (1000) ausgebildet ist.

## Beschreibung

### BESCHREIBUNG

Die vorliegende Erfindung betrifft eine Verriegelungsvorrichtung für eine Ladesteckdoseneinheit sowie eine Ladesteckdoseneinheit für eine Ladestation oder ein Elektrofahrzeug mit einer erfindungsgemäßen Verriegelungsvorrichtung.

### STAND DER TECHNIK

Zum konduktiven Auf- oder Entladen der Batterien von Elektrofahrzeugen an Ladestationen sind standardisierte Steckertypen und Lademodi bekannt, insbesondere aus der internationalen Norm IEC 62196. Ein Aspekt betrifft dabei eine mechanische Verriegelung des Ladesteckers an der Ladesteckdose als Sicherheitsmaßnahme während des Ladevorgangs. Bei der als europaweitem Standard für Elektrofahrzeug verwendeten Typ-2-Ladekupplung wird der eingesteckte Ladestecker an der Ladesteckdose mittels eines Verriegelungsstiftes verriegelt. Der Verriegelungsstift ist Bestandteil einer Verriegelungsvorrichtung, die eine Verlagerung des Verriegelungsstiftes zum Schließen und Öffnen der Verriegelung antreibt.

Ladesteckdosen müssen zudem gegen Witterung und Umwelteinflüsse geschützt werden, wozu im Stand der Technik Dosenabdeckungen mit federgespannten Deckelklappen bekannt sind. Diese bieten zumeist jedoch keine ausreichende Dichtheit, um ein Eindringen von Feuchtigkeit oder Staub verlässlich zu gewährleisten, insbesondere mit zunehmender Alterung. Zudem besteht nachteiligerweise kein Schutz gegen unbefugtes Öffnen und Vandalismus.

### OFFENBARUNG DER ERFINDUNG

Es ist die Aufgabe der vorliegenden Erfindung eine Verriegelungsvorrichtung und eine zugehörige Ladesteckdoseneinheit vorzuschlagen, die sowohl ein normgerechtes Verriegeln eines Ladesteckers als auch einen zweckmäßigen Schutz der Ladesteckdose außerhalb des Ladebetriebs zu ermöglichen.

Diese Aufgabe wird ausgehend von einer Verriegelungsvorrichtung gemäß Anspruch 1 und einer damit ausgestatteten Ladesteckdoseneinheit gemäß Anspruch 6 gelöst. Vorteilhafte Weiterbildungen der Erfindung sind in den abhängigen Ansprüchen angegeben.

Die technische Lehre der Erfindung offenbart eine Verriegelungsvorrichtung für eine Ladesteckdoseneinheit, umfassend
- einen elektromotorischen Stellantrieb,
- ein mittels des Stellantriebs betätigbares erstes Verriegelungsmittel mit einem Verriegelungsstift zum Verriegeln eines Ladesteckers an einer Ladesteckdose der Ladesteckdoseneinheit, und
- ein mittels des Stellantriebs betätigbares zweites Verriegelungsmittel, das zum Verriegeln einer Dosenabdeckung der Ladesteckdoseneinheit ausgebildet ist.

Die Erfindung geht von dem Gedanken aus, die Verriegelungsvorrichtung mit zwei Verriegelungsmitteln auszubilden, die beide mittels desselben elektromotorischen Stellantriebs aktuierbar sind und zum Verriegeln eines Ladesteckers und einer Dosenabdeckung eingerichtet sind. Damit wird eine Verriegelungsvorrichtung mit erhöhtem Funktionsumfang geschaffen, die jedoch hinsichtlich des Einbaumaßes und der Einbauposition an der zugehörigen Ladesteckdose kompatibel mit den im Stand der Technik gebräuchlichen Ladesteckdoseneinheiten ausgebildet ist. Der Verriegelungsstift weist einen zapfenförmigen Endabschnitt auf, der zum Eingreifen in eine zugehörige Aufnahme am Umfang des Ladesteckers ausgebildet ist, sodass dieser gegen ein unerwünschtes Herausziehen aus der Ladesteckdose gesichert werden kann. Mittels des zweiten Verriegelungsmittels kann die Dosenabdeckung außerhalb des Ladebetriebs abgesperrt werden, sodass ein unbefugtes Öffnen verhindert werden kann. Weiterhin kann mittels des zweiten Verriegelungsmittels vorzugsweise eine derartige Kraft auf die Dosenabdeckung ausgeübt werden, dass die Dosenabdeckung in mediendichte Anlage an eine Halterung der Ladesteckdoseneinheit gelangt.

Insbesondere weist der elektromotorische Stellantrieb eine Abtriebswelle auf, wobei das erste Verriegelungsmittel und/oder das zweite Verriegelungsmittel wenigstens komponentenweise an der Abtriebswelle aufgenommen und mit dieser drehfest verbunden sind. Somit können durch Betätigung des Stellantriebs vorzugsweise beide Verriegelungsmittel simultan aktuiert werden. Der Stellantrieb umfasst neben einem Elektromotor beispielsweise ein der Abtriebswelle vorgeschaltetes Getriebe.

Eine vorteilhafte Ausführungsform der Verriegelungsvorrichtung ist dadurch gekennzeichnet, dass das erste Verriegelungsmittel
- einen Antriebsarm mit einem Langloch aufweist, wobei der Antriebsarm drehfest mit der Abtriebswelle des Stellantriebs verbunden ist und von dieser radial abragt, wobei der Verriegelungsstift einen Zapfen aufweist, der in das Langloch eingreift, und
- einen Halterahmen zur Führung des Verriegelungsstifts aufweist, derart, dass eine Drehung der Abtriebswelle in eine Translation des Verriegelungsstifts übertragbar ist. Eine Drehung der Abtriebswelle führt zu einer Schwenkbewegung des Antriebsarms, und über den in dem Langloch mitgenommenen Zapfen wird eine Verlagerung des linear geführten Verriegelungsstifts erzeugt. Zwischen den zweckmäßigen Extremalstellungen des Verriegelungsstifts kann der Drehwinkel der Abtriebswelle beispielsweise ca. 90° betragen.

Eine alternative Ausführungsform ist dadurch gekennzeichnet, dass das erste Verriegelungsmittel
- ein Zahnrad aufweist, das mit der Abtriebswelle des Stellantriebs drehfest verbunden ist, wobei der Verriegelungsstift abschnittsweise als eine Zahnstange ausgebildet ist, in die das Zahnrad eingreift, und
- einen Halterahmen zur Führung des Verriegelungsstifts aufweist,
derart, dass eine Drehung der Abtriebswelle in eine Translation des Verriegelungsstifts übertragbar ist.

Das zweite Verriegelungsmittel weist insbesondere einen Haken auf, der mit der Abtriebswelle drehfest verbunden und zum Eingreifen in eine Öse an der Dosenabdeckung ausgebildet ist. Eine Drehung der Abtriebswelle führt zu einer Schwenkbewegung des Hakens, wodurch dieser in die Öse hinein bzw. heraus geführt wird. Vorzugsweise übt der Haken in der Verriegelungsstellung, d.h., in Eingriff mit der Öse, eine Kraft auf die Öse aus, mittels der die Dosenabdeckung an eine zugehörige Anlagefläche der Ladesteckdoseneinheit angepresst wird, sodass die Dichtheit gegen Eindringen von Wasser oder Staub verbessert wird.

Weiterhin betrifft die Erfindung eine Ladesteckdoseneinheit für eine Ladestation oder ein Elektrofahrzeug, umfassend eine Ladesteckdose, eine Dosenabdeckung zum Verschließen der Ladesteckdose, und eine Verriegelungsvorrichtung gemäß einer der vorgenannten Ausführungsformen, wobei die Verriegelungsvorrichtung derart angeordnet ist, dass mittels Betätigung des ersten Verriegelungsmittels ein Ladestecker an der Ladesteckdose verriegelbar ist, und dass mittels Betätigung des zweiten Verriegelungsmittels die Dosenabdeckung verriegelbar ist. Die Verriegelungsvorrichtung ist insbesondere oberhalb der Ladesteckdose angeordnet, und am Gehäuse der Ladesteckdose ist eine Öffnung für den Verriegelungsstift ausgebildet, sodass dieser beim Verriegeln bis in eine Aufnahme an einem zu verriegelnden Ladestecker hindurchgeführt werden kann.

Die erfindungsgemäße Ladesteckdoseneinheit kann prinzipiell für die Verwendung in unterschiedlichen Typen von Elektrofahrzeugen konfiguriert sein, insbesondere für Personenkraftfahrzeuge, Lastkraftwagen oder Baumaschinen.

In einer vorteilhaften Ausführungsform der Ladesteckdoseneinheit umfasst die Dosenabdeckung eine Deckelklappe mit innenseitiger Öse, wobei das zweite Verriegelungsmittel einen Haken aufweist, wobei der Haken mittels der Abtriebswelle der Verriegelungsvorrichtung zwischen einer Verriegelungsstellung, in welcher der Haken in die Öse eingreift, und einer Freigabestellung, in welcher der Haken keine Verbindung mit der Öse ausbildet, drehbar bzw. schwenkbar ist.

Insbesondere ist die Ladesteckdose der erfindungsgemäßen Ladesteckdoseneinheit als eine Typ-2-Steckdose gemäß der Norm IEC 62196-2 ausgebildet.

### BEVORZUGTE AUSFÜHRUNGSBEISPIELE DER ERFINDUNG

Weitere die Erfindung verbessernde Maßnahmen werden nachstehend gemeinsam mit der Beschreibung von bevorzugten Ausführungsbeispielen der Erfindung anhand der Figuren dargestellt. Es zeigen:
- Fig. 1a, 1b:: eine Verriegelungsvorrichtung in Freigabe- und Verriegelungsstellung,
- Fig. 2a, 2b:: weitere Ansichten zu Fig. 1b,
- Fig. 3a, 3b:: ein elektromotorischer Stellantrieb,
- Fig. 4:: eine erste Ausführungsform eines Verriegelungsstifts,
- Fig. 5:: einen Halterahmen für den Verriegelungsstift der Fig. 4,
- Fig. 6a, 6b:: eine erste Ausführungsform des ersten Verriegelungsmittels in Freigabe- und Verriegelungsstellung,
- Fig. 7:: eine zweite Ausführungsform eines Verriegelungsstifts,
- Fig. 8:: eine zweite Ausführungsform des ersten Verriegelungsmittels,
- Fig. 9a - 11b:: Ansichten einer Ladesteckdoseneinheit mit verriegelter und geöffneter Dosenabdeckung.

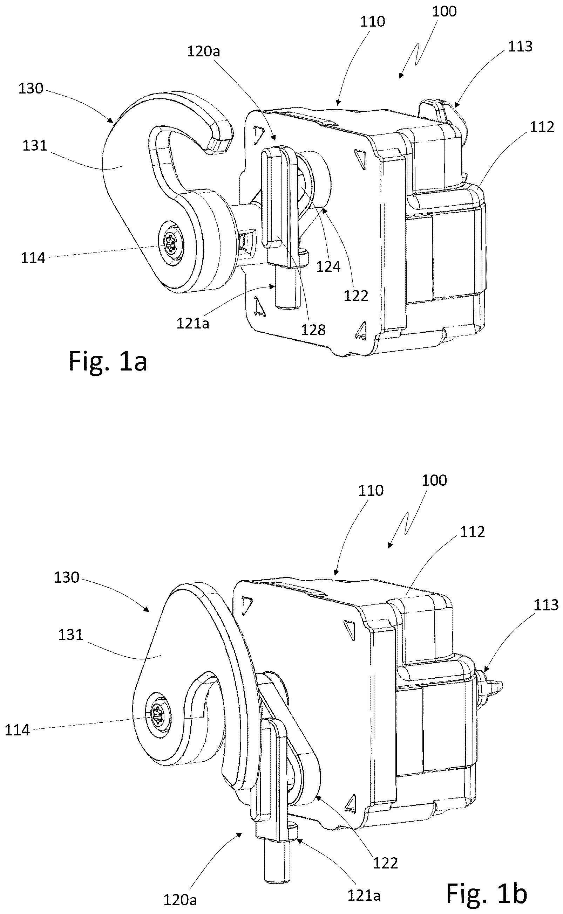

Die Figuren 1a - 2b zeigen perspektivische Ansichten einer Ausführungsform der erfindungsgemäßen Verriegelungsvorrichtung 100, wobei zum Zwecke der Übersichtlichkeit der Halterahmen zur Führung des Verriegelungsstifts 121a jeweils nicht dargestellt ist. Die Verriegelungsvorrichtung 100 umfasst den elektromotorischen Stellantrieb 110, das mittels des Stellantriebs 110 betätigbare erste Verriegelungsmittel 120a mit dem Verriegelungsstift 121a zum Verriegeln eines Ladesteckers, sowie das mittels des Stellantriebs 110 betätigbare zweite Verriegelungsmittel 130 zum Verriegeln einer Dosenabdeckung. Fig. 1a zeigt die beiden Verriegelungsmittel 120a, 130 in der Freigabestellung, die weiteren Figuren zeigen die Verriegelungsstellung.

Der Stellantrieb 110 weist eine hier nicht sichtbare Abtriebswelle auf, die um die Drehachse 114 drehbar ist, wobei das erste Verriegelungsmittel 120a und das zweite Verriegelungsmittel 130 komponentenweise an der Abtriebswelle aufgenommen und mit dieser drehfest verbunden sind. Die elektromotorischen Komponenten des Stellantriebs 110 sind in dessen Gehäuse 112 aufgenommen und werden über die Kontaktbuchse 115 versorgt und/oder angesteuert.

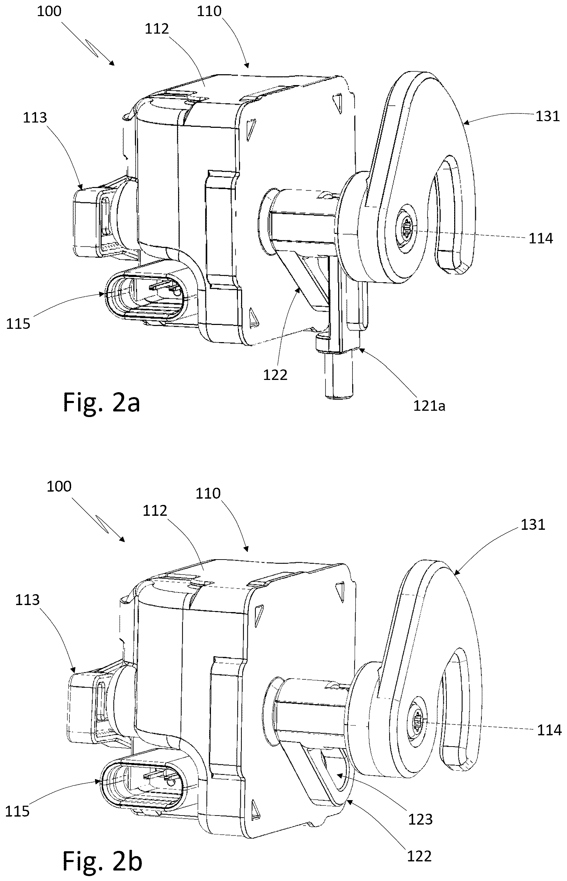

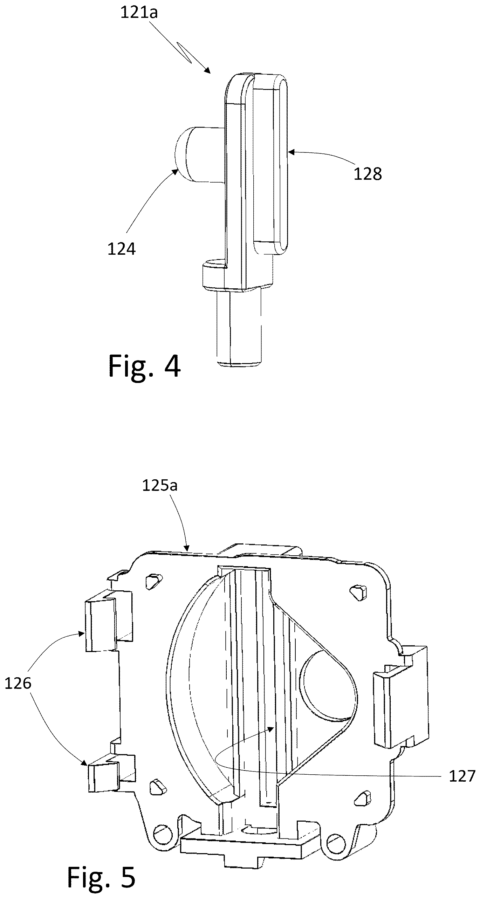

Das erste Verriegelungsmittel 120a weist den Antriebsarm 122 mit dem Langloch 123 auf, wobei der Antriebsarm 122 drehfest mit der Abtriebswelle des Stellantriebs 110 verbunden ist und von dieser radial abragt, wobei der Verriegelungsstift 121a den Zapfen 124 aufweist, der in das Langloch 123 eingreift. Das Langloch ist insbesondere in der Fig. 2b sichtbar, in welcher der Verriegelungsstift zu diesem Zwecke nicht dargestellt ist. Im Zusammenspiel mit dem in den Figuren nicht dargestellten Halterahmen zur Führung des Verriegelungsstifts 121a (siehe dazu Fig. 5) ist eine Drehung der Abtriebswelle um die Drehachse 114 in eine Translation des Verriegelungsstifts 121a übertragbar, d.h., in eine lineare Auf- und Abbewegung zwischen den in den Figuren dargestellten Extremalstellungen. Der zapfenförmige Endabschnitt des Verriegelungsstifts 121a dient zum Eingreifen in eine passende Aufnahme an einem zu verriegelnden Ladestecker.

Das zweite Verriegelungsmittel 130 weist den Haken 131 auf, der mit der Abtriebswelle drehfest verbunden und zum Eingreifen in eine Öse an der Dosenabdeckung ausgebildet ist. Mittels des Stellantriebs 110 sind beide Verriegelungsmittel 120a, 130 simultan betätigbar und befinden sich jeweils gemeinsam in der jeweiligen Freigabe- oder Verriegelungsstellung.

Die Verriegelungsvorrichtung 100 umfasst zudem einem Notentriegelungsmechanismus mit dem aus dem Gehäuse 112 rückseitig herausragenden Notentriegelungshebel 113 zum händischen Drehen der Abtriebswelle zum Ent- oder Verriegelung der beiden Verriegelungsmittel 120a, 130 für den Fall eines Ausfalls des elektromotorischen Stellantriebs 110.

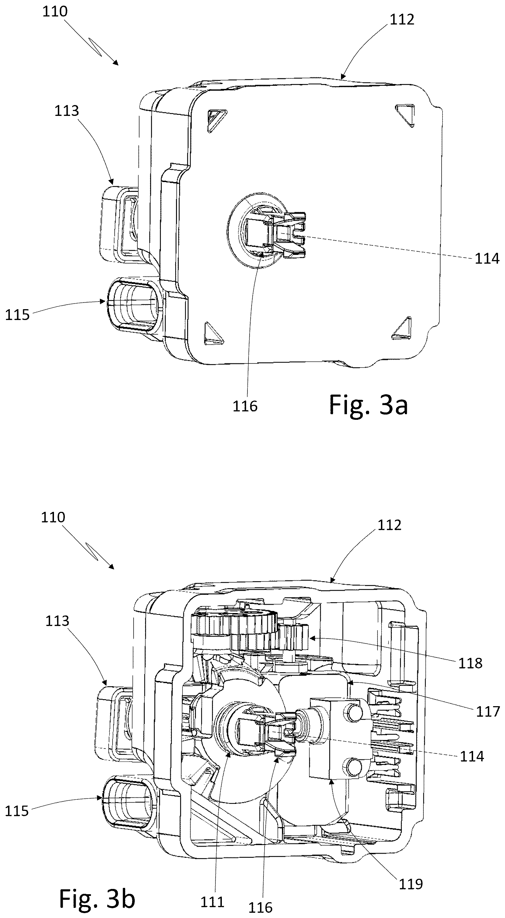

Die Figuren 3a und 3b zeigen den elektromotorischen Stellantrieb 110 einer erfindungsgemäßen Verriegelungsvorrichtung, wobei in Fig. 3b die Frontabdeckung des Gehäuses 112 entfernt ist, sodass die elektromotorischen Komponenten im Inneren sichtbar sind. Der Stellantrieb 110 umfasst den Elektromotor 117, der die Abtriebswelle 11 über des zwischengeschaltete Zahnradgetriebe 118 antreibt. An der Abtriebswelle 11 ist das Aufnahmestück 116 angeordnet, über das die drehfeste Verbindung zu den Verriegelungsmitteln realisierbar ist. Mittels des Drucksensors 119 kann ein Druck auf die Dosenabdeckung detektiert werden, wodurch ein Steuerbefehl an den Elektromotor zum Entriegeln der Verriegelungsmittel ergehen kann. Ein solches druckgesteuertes Öffnen der Ladesteckdoseneinheit kann beispielsweise während bestimmter Betriebszeiten einer zugehörigen Ladestation aktiviert sein, sodass Benutzer durch händisches Drücken einen Ladevorgang beginnen können.

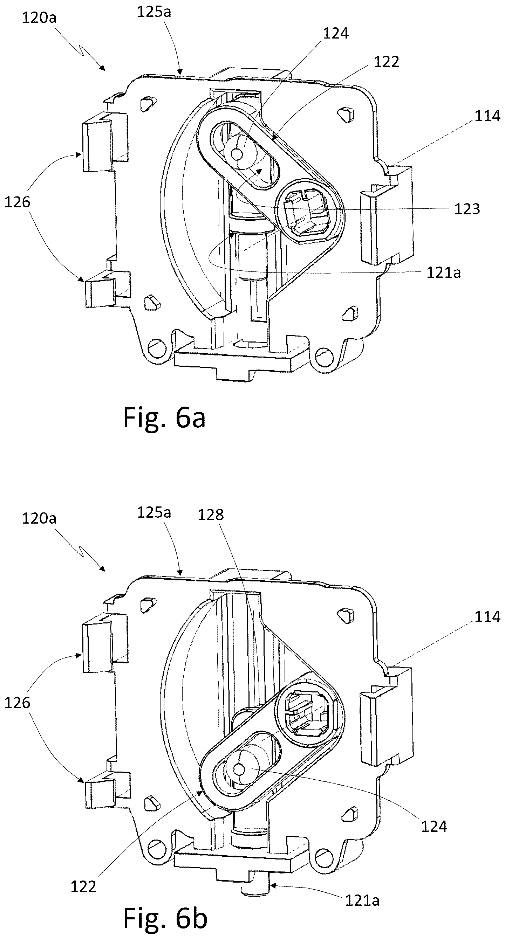

Fig. 4 zeigt eine erste Ausführungsform des Verriegelungsstifts 121a entsprechend des Ausführungsbeispiels der Figuren 1a - 2b, und Fig. 5 zeigt den zugehörigen Halterahmen 125a, der in den vorgenannten Figuren zwecks Übersichtlichkeit nicht dargestellt ist. In den Figuren 6a und 6b sind sämtliche Komponenten des ersten Verriegelungsmittels 120a in rückwärtiger Ansicht dargestellt.

Der Verriegelungsstift 121a umfasst den Zapfen 124 zum Eingreifen in das Langloch 124 am Antriebsarm 122, sowie die Feder 128 zum Einschub in die Führungsnut 127 des Halterahmens 125a. Der Halterahmen 125a bietet dem Antriebsarm 122 Raum für einen Schwenkbereich von ca. 90°, wobei die Verschwenkung des Antriebsarms 122 mittels einer Drehung der (nicht dargestellten) drehfest verbundenen Abtriebswelle des Stellantriebs um die Drehachse 114 erfolgt. Zur Anbindung an das Gehäuse des Stellantriebs umfasst der Halterahmen 125a die Rastarme 126.

Fig. 6a zeigt den Verriegelungsstift 121a in der Freigabestellung, in der er vollständig in den Halterahmen 125a hinein verlagert ist, und Fig. 6b zeigt die Verriegelungsstellung, in der der zapfenförmige Endabschnitt des Verriegelungsstifts 121a unterseitig aus dem Halterahmen 125a austritt und so in Eingriff mit einer passenden Aufnahme an einem Ladestecker bringbar ist.

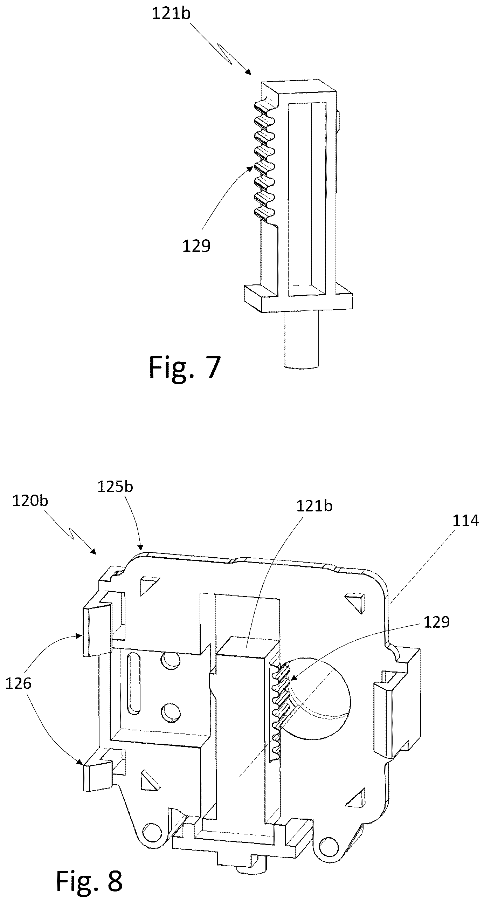

Fig. 7 zeigt eine zweite Ausführungsform des Verriegelungsstifts 121b, der abschnittsweise als Zahnstange 129 ausgebildet ist. In Fig. 8 ist der Verriegelungsstift 121b mit dem zugehörigen Halterahmen 125b als Komponenten einer zweiten Ausführungsform des ersten Verriegelungsmittels 120b gezeigt. Nicht dargestellt ist ein zugehöriges Zahnrad, das mit der Abtriebswelle des Stellantriebs 110 drehfest verbunden und damit um die Drehachse 114 drehbar ist. Über einen Eingriff des Zahnrads mit der Zahnstange 129 ist somit eine Drehung der Abtriebswelle in eine Translation des Verriegelungsstifts 121b übertragbar.

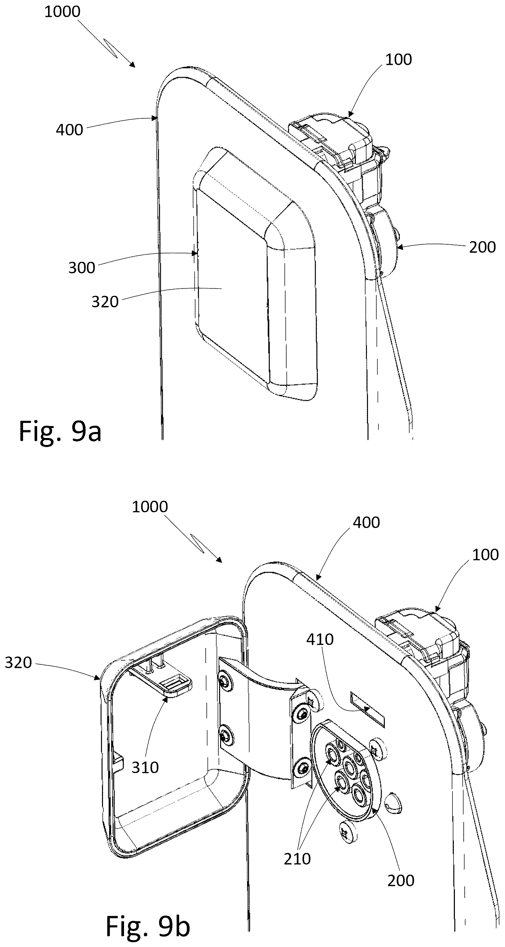

Die Figuren 9a - 10b zeigen perspektivische Ansichten einer Ausführungsform der erfindungsgemäßen Ladesteckdoseneinheit 1000 umfassend die Ladesteckdose 200, die Dosenabdeckung 300 und die erfindungsgemäße Verriegelungsvorrichtung 100. Die Ladesteckdose 200 ist als eine Typ-2-Steckdose gemäß der Norm IEC 62196-2 ausgebildet. Die Ladesteckdoseneinheit 1000 ist hier beispielhaft als Bestandteil einer Ladestation an der Halterung 400 aufgenommen. Außerdem wäre eine fahrzeugseitige Integration möglich.

Die Verriegelungsvorrichtung 100 ist derart angeordnet, dass mittels Betätigung des ersten Verriegelungsmittels 120a ein Ladestecker an der Ladesteckdose 200 verriegelbar ist, und dass mittels Betätigung des zweiten Verriegelungsmittels 130 die Dosenabdeckung 300 verriegelbar ist.

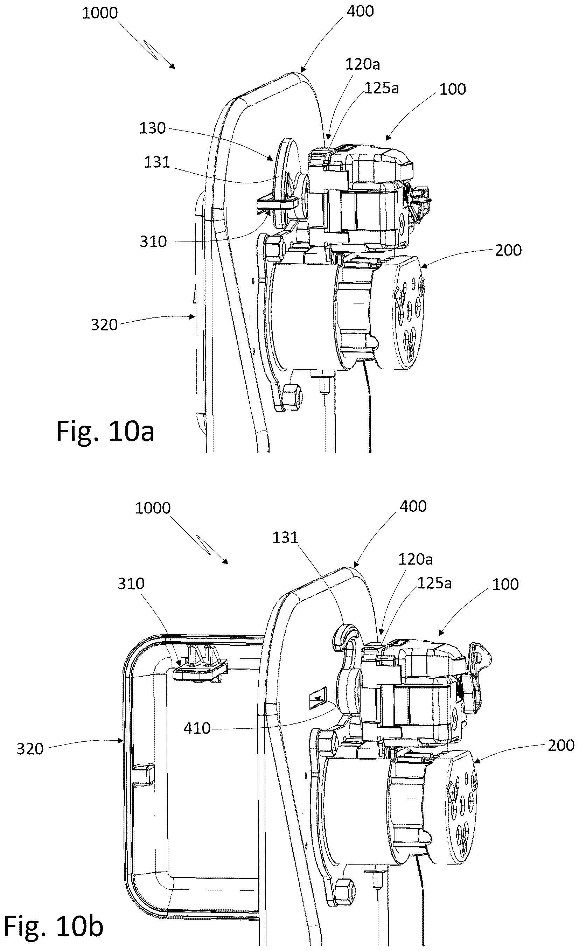

Die Dosenabdeckung 300 umfasst die Deckelklappe 320 mit der innenseitigen Öse 310, wobei das zweite Verriegelungsmittel 130 den zugehörigen Haken 131 aufweist. Der Haken 131 ist mittels der Abtriebswelle der Verriegelungsvorrichtung 100 zwischen der in den Figuren 9a und 10a gezeigten Verriegelungsstellung, in welcher der Haken 131 in die Öse 310 eingreift, und der in den Figuren 9b und 10b gezeigten Freigabestellung, in welcher der Haken 131 keine Verbindung mit der Öse 310 ausbildet, dreh- bzw. schwenkbar.

In der geschlossenen Stellung deckt die Dosenabdeckung 300 die Ladekontakte 210 schützend ab und durch den Schlitz 410 in der Halterung 400 gelang die Öse 310 in den Schwenkbereich des Hakens 131. In der Verriegelungsstellung übt der Haken 131 über die Öse 310 eine Kraft auf die Deckelklappe aus, wodurch diese in mediendichter Anlage an der Vorderseite der Halterung 400 gehalten wird.

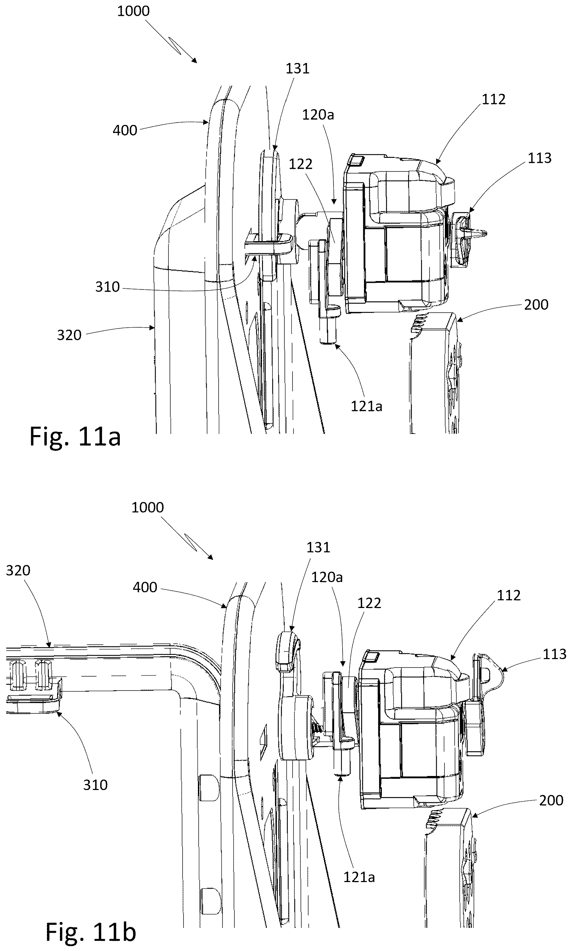

Die Figuren 11a und 11b zeigen Ausschnitte derselben Ausführungsform der Ladesteckdoseneinheit 1000, wobei hier der Halterahmen des ersten Verriegelungsmittels 120a sowie die Ladesteckdose 200 bis auf die rückseitige Abdeckung nicht dargestellt sind, sodass die Stellung des Verriegelungsstifts 121a relativ zu der Ladesteckdose 200 in der Verriegelungsstellung (Fig. 11a) und in der Freigabestellung (Fig. 11b). Daraus wird ersichtlich, dass der zapfenförmige Endabschnitt des Verriegelungsstifts 121a zwecks Verriegelung eines Ladesteckers durch den Umfang des Gehäuses in die Ladesteckdose 200 eintaucht.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten und räumlicher Anordnungen, können sowohl für sich als auch in den verschiedensten Kombinationen erfindungswesentlich sein.

### Bezugszeichenliste

- 1000: Ladesteckdoseneinheit
- 100: Verriegelungsvorrichtung
- 110: Stellantrieb
- 111: Abtriebswelle
- 112: Gehäuse
- 113: Notentriegelungshebel
- 114: Drehachse
- 115: Kontaktbuchse
- 116: Aufnahmestück
- 117: Elektromotor
- 118: Zahnradgetriebe
- 119: Drucksensor
- 120a, 120b: erstes Verriegelungsmittel
- 121a, 121b: Verriegelungsstift
- 122: Antriebsarm
- 123: Langloch
- 124: Zapfen
- 125a, 125b: Halterahmen
- 126: Rastarm
- 127: Führungsnut
- 128: Feder
- 129: Zahnstange
- 130: zweites Verriegelungsmittel
- 131: Haken
- 200: Ladesteckdose
- 210: Ladekontakt
- 300: Dosenabdeckung
- 310: Öse
- 320: Deckelklappe
- 400: Halterung
- 410: Schlitz

## Patentansprüche

1. Verriegelungsvorrichtung (100) für eine Ladesteckdoseneinheit (1000), umfassend
- einen elektromotorischen Stellantrieb (110),
- ein mittels des Stellantriebs (110) betätigbares erstes Verriegelungsmittel (120a, 120b) mit einem Verriegelungsstift (121a, 121b) zum Verriegeln eines Ladesteckers an einer Ladesteckdose (200) der Ladesteckdoseneinheit (1000), und
- ein mittels des Stellantriebs (110) betätigbares zweites Verriegelungsmittel (130), das zum Verriegeln einer Dosenabdeckung (300) der Ladesteckdoseneinheit (1000) ausgebildet ist.

2. Verriegelungsvorrichtung (100) nach Anspruch 1, **dadurch gekennzeichnet, dass** der Stellantrieb (110) eine Abtriebswelle (111) aufweist, wobei das erste Verriegelungsmittel (120a, 120b) und/oder das zweite Verriegelungsmittel (130) wenigstens komponentenweise an der Abtriebswelle (111) aufgenommen und mit dieser drehfest verbunden sind.

3. Verriegelungsvorrichtung (100) nach Anspruch 2, **dadurch gekennzeichnet, dass** das erste Verriegelungsmittel (120a)
- einen Antriebsarm (122) mit einem Langloch (123) aufweist, wobei der Antriebsarm (122) drehfest mit der Abtriebswelle (111) des Stellantriebs (110) verbunden ist und von dieser radial abragt, wobei der Verriegelungsstift (121a) einen Zapfen (124) aufweist, der in das Langloch (123) eingreift, und
- einen Halterahmen (125a) zur Führung des Verriegelungsstifts (121a) aufweist, derart, dass eine Drehung der Abtriebswelle (111) in eine Translation des Verriegelungsstifts (121a) übertragbar ist.

4. Verriegelungsvorrichtung (100) nach Anspruch 2, **dadurch gekennzeichnet, dass** das erste Verriegelungsmittel (120b)
- ein Zahnrad aufweist, das mit der Abtriebswelle (111) des Stellantriebs (110) drehfest verbunden ist, wobei der Verriegelungsstift (121b) abschnittsweise als eine Zahnstange (129) ausgebildet ist, in die das Zahnrad eingreift, und
- einen Halterahmen (125b) zur Führung des Verriegelungsstifts (121b) aufweist,
derart, dass eine Drehung der Abtriebswelle (111) in eine Translation des Verriegelungsstifts (121b) übertragbar ist.

5. Verriegelungsvorrichtung (100) nach einem der Ansprüche 2 bis 4, **dadurch gekennzeichnet, dass** das zweite Verriegelungsmittel (130) einen Haken (131) aufweist, der mit der Abtriebswelle (111) drehfest verbunden und zum Eingreifen in eine Öse (310) an der Dosenabdeckung (300) ausgebildet ist.

6. Ladesteckdoseneinheit (1000) für eine Ladestation oder ein Elektrofahrzeug, umfassend eine Ladesteckdose (200), eine Dosenabdeckung (300) zum Verschließen der Ladesteckdose (200), und eine Verriegelungsvorrichtung (100) gemäß einem der vorgenannten Ansprüche, wobei die Verriegelungsvorrichtung (100) derart angeordnet ist, dass mittels Betätigung des ersten Verriegelungsmittels (120a, 120b) ein Ladestecker an der Ladesteckdose (200) verriegelbar ist, und dass mittels Betätigung des zweiten Verriegelungsmittels (130) die Dosenabdeckung (300) verriegelbar ist.

7. Ladesteckdoseneinheit (1000) nach Anspruch 6, **dadurch gekennzeichnet, dass** die Dosenabdeckung (300) eine Deckelklappe (320) mit einer innenseitigen Öse (310) umfasst, wobei das zweite Verriegelungsmittel (130) einen Haken (131) aufweist, wobei der Haken (131) mittels der Abtriebswelle (111) der Verriegelungsvorrichtung (100) zwischen einer Verriegelungsstellung, in welcher der Haken (131) in die Öse (310) eingreift, und einer Freigabestellung, in welcher der Haken (131) keine Verbindung mit der Öse (310) ausbildet, drehbar ist.

8. Ladesteckdoseneinheit (1000) nach Anspruch 6 oder 7, **dadurch gekennzeichnet, dass** die Ladesteckdose (200) als eine Typ-2-Steckdose gemäß der Norm IEC 62196-2 ausgebildet ist.
